# EUROPÄISCHE PATENTANMELDUNG

(11) **EP 2 255 943 A2**
(43) Veröffentlichungstag der Anmeldung: **01.12.2010**
(21) Anmeldenummer: 10004766.1
(22) Anmeldetag: 06.05.2010
(51) Int. Cl.: B29C 44/12, B29C 44/14

(54) **Verfahren zur Herstellung eines Polsterteils, insbesondere eines Sitzpolsters oder Rückenlehnenpolsters für einen Fahrzeugsitz**

(30) Priorität: 25.05.2009 DE 102009022482
(71) Anmelder: Magna Seating (Germany) GmbH, 63877 Sailauf (DE)
(72) Erfinder: Hoge, Ralf, 42477 Radevormwald (DE)
(74) Vertreter: Völger, Silke Beatrix

(57) **Zusammenfassung**

Ein Verfahren zur Herstellung eines Polsterteils, insbesondere eines Sitzpolsters für einen Fahrzeugsitz bei dem in einem ersten Schritt zunächst eine Textilauflage (4,8) in eine Werkzeugform eingelegt, in einem zweiten Schritt eine schaumundurchlässigen Sperrschicht (5) auf der zur Kavität der Werkzeugform zugewandten Seite der Textilauflage (4,8) aufgebracht wird, in einem weiteren Schritt ein aufschäumbaren und aushärtbaren Materials eingebracht, und man in einem daran anschließenden Schritt das Material aushärten lässt und dann das Polsterteil (1) aus der Werkzeugform entnimmt, soll derart weitergebildet werden, dass die Fertigung mit wenigen Verfahrensschritten kostengünstig realisierbar und der Sitzkomfort eines mit dem Polsterteil ausgestatten Fahrzeugsitzes verbessert wird. Dies wird dadurch erreicht, das in einem zusätzlichen Schritt zwischen Textilauflage (4,8) und Sperrschicht (5) eine Anzahl länglicher hohlraumbildender Stützstrukturen eingebracht werden.

## Beschreibung

Die vorliegende Erfindung betrifft ein Verfahren zur Herstellung eines Polsterteils, insbesondere eines Sitzpolsters oder Rückenlehnenpolsters für einen Fahrzeugsitz.

Um den Komfort eines Benutzers in Fahrzeugen zu verbessern, ist die Schaffung eines optimalen Fahrzeugklimas sehr wichtig. Es werden häufig Fahrzeugsitze mit einer Belüftung. Kühlung, Heizung oder einer Kombination hiervon eingesetzt. Ein angenehmeres Sitzklima wird beispielsweise durch eine aktiv oder passiv belüftbare Sitzfläche erreicht.

Fahrzeugsitze mit einer Klimafunktion sind bereits in einer Vielzahl von Ausführungsformen bekannt. Bei Fahrzeugsitzen mit einer aktiven Klimatisierung sind dabei Lüfter vorgesehen, die Luft zur Erzielung der Klimafunktion durch die Sitzfläche bzw. die Lehnenfläche blasen oder ansaugen.

Aus der DE 100 24 879 C1 ist bereits ein aktiv belüftetes Sitzmodul für einen Fahrzeugsitz mit einem Polster bekannt. Das Polster besteht dabei im Wesentlichen aus einer luftundurchlässigen unteren Schaumstoffschicht, einer Luftführungsschicht aus einem Gewirk, einer luftdurchlässigen oberen Schaumstoffschicht, sowie einem die obere Schaumstoffschicht überdeckenden Polsterbezug. Dieses bekannte Sitzmodul bietet zwar hinsichtlich der erzielbaren Klimatisierung einen guten Sitzkomfort, ist allerdings hinsichtlich der Fertigung relativ aufwändig und teuer.

Das aus der DE 10 2006 017 103 A1 bekannte Schaumpolster mit Klimaschicht zur Verwendung an einem Fahrzeugsitz als passiv belüftbare Sitzfläche ist hinsichtlich seiner Fertigung relativ einfach herstellbar. Dieses bekannte Polsterelement besteht aus einem geschäumten Polsterelement, wobei auf der der Sitzfläche zugewandten Seite eine Klimaschicht vorgesehen ist. Zwischen Kilmaschicht und Polsterelement ist zur Vermeidung von Schaumdurchschlägen bei dem Fertigungsprozess eine zusätzliche schaumundurchlässige Sperrschicht vorgesehen. Die Klimaschicht kann bei dem vorbekannten Fahrzeugsitz durch Anordnung von Lüftern auch aktiv belüftet werden.

Aufgabe der vorliegenden Erfindung ist es, ein Verfahren zur Herstellung eines Polsterteils, insbesondere eines Sitzpolsters für einen Fahrzeugsitz derart weiterzubilden, dass die Fertigung mit wenigen Verfahrensschritten kostengünstig realisierbar und der Sitzkomfort eines mit dem Polsterteil ausgestatten Fahrzeugsitzes verbessert wird.

Diese Aufgabe wird dabei durch die im Anspruch 1 angegebenen Merkmale gelöst.

Weitere vorteilhafte Ausgestaltungen und Weiterbildungen des erfindungsgemäßen Verfahrens ergeben sich aus den Unteransprüchen.

Die Erfindung wird durch das anhand der Zeichnungen dargestellten Ausführungsbeispiels näher erläutert.

Es zeigt:

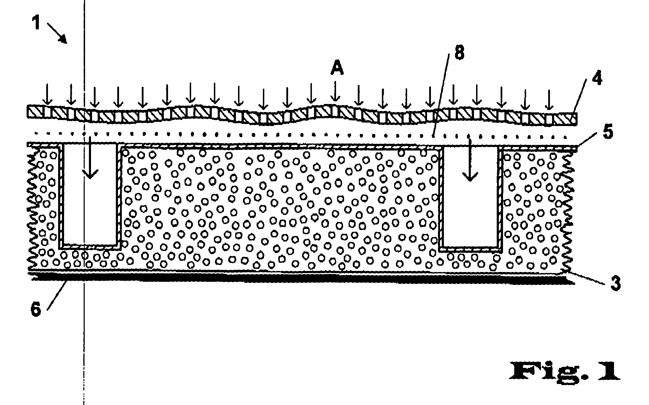

Fig.1 ein Sitzpolster für einen Fahrzeugsitz im Querschnitt.

Ein herkömmlicher Fahrzeugsitz besteht aus einer ersten Tragstruktur mit einer daran angeordneten Rückenlehne, einem Sitzkissen mit einem Sitzpolster 1 und einer zugeordneten zweiten Tragstruktur sowie einer Bodenabstützung. Zur passiven oder aktiven Klimatisierung der Sitzfläche bzw. der Rückenlehne kann das nachstehend anhand der Figur 1 beschriebene klimatisierbare Sitzpolster 1 eingesetzt werden.

Figur 1 zeigt dabei das erfindungsgemäße Sitzpolster 1 in einer schematischen Darstellung im Querschnitt. Dabei weist das Sitzpolster 1 eine dem Benutzer zugewandte obere Seite A auf. Ausgehend von der oberen Seite A umfasst das Sitzpolster 1 eine Textilauflage 4,8, die bevorzugt aus einem mit einem Vlies, einem Filz oder einem Stoff kaschierten luftdurchlässigen Bezug 4 besteht. Der luftdurchlässige Bezug 4, der die obere Seite A bildet, kann dabei aus einem Stoff bestehen. In einer anderen Ausgestaltung des Sitzpolsters 1 kann als Material für den Bezug 4 auch Leder oder Kunstleder eingesetzt werden. Bei diesen Ausführungsformen wird die Luftdurchlässigkeit durch eine Perforation des Materials erzielt. Hierbei kann die Perforation sowohl über die gesamte Sitzfläche verteilt, oder auch nur in gezielten Bereichen eingebracht sein. Als Material für die Kaschierung 8 wird bevorzugt ein Nadelvlies. Nadelfilz aus Baumwollfasern oder Cellulose Regeneratfasern oder dergleichen verwendet. Das verwendete Material muss eine hohe Atmungsaktivität und insbesondere die Feuchtigkeit zwischenspeichemde Eigenschaften besitzen.

Die Textilauflage 4,8 als obere Schicht liegt auf der Polsterschicht 3 auf. Die Polsterschicht 3 ist eine Schicht aus beispielsweise einem Polyurethanschaum. Aus der schematischen Darstellung der Figur 1 ist ersichtlich, dass in die Polsterschicht Luftführungskanäle 7 eingebracht sind, die sich in einer horizontalen Ebene in Längsrichtung durch die Posterschicht 1 erstrecken. In den Luftführungskanälen 7 sind dabei längliche Stützstrukturen angeordnet, die zeichnerisch in der Figur 1 nicht dargestellt sind. Die Stützstrukturen sind luftdurchlässig und druckelastisch. Die Elastizität der Stützstrukturen entspricht dabei vorzugsweise der Elastizi-tät des ausgehärteten Schaummaterials. Als Material für die Stützstrukturen kann beispielsweise Draht verwendet werden, der in Längsausrichtung spiral- oder mäanderförmig gewunden sein kann.

Die zur Seite A weisende Oberfläche der Polsterschicht 3 ist mit einer schaumundurchlässigen Sperrschicht 5 versehen. Diese verhindert bei dem nachfolgend beschriebenen Fertigungsverfahren einen Schaumdurchschlag in die Luftführungskanäle 7 bzw. in die Textilauflage 4,8. Die Luftführungskanäle 7 haben die Aufgabe eine Ableitung bzw. Zuführung eines Luftstroms quer zum oben beschriebenen Schichtaufbau zu ermöglichen.

Das erfindungsgemäße Polsterteil, insbesondere Sitzpolster 1 kann als passiv oder auch als aktiv ausgestaltetes Sitzpolster ausgestaltet sein. Bei einer Ausführung als aktives Sitzpolster sind die Luftführungskanäle 7 über entsprechende Anschlussstellen zusammengeführt und mit einem nicht dargestellten Lüfter verbunden.

Die obenstehend beschriebene Anordnung und Ausbildung der luftdurchlässigen Textilauflage 4,8, der Luftführungskanäle 7 sowie der Strömungsverbindung mit dem Lüfter gewährleistet eine Belüftung der Sitzfläche bzw. der Rückenlehne eines Kraftfahrzeugsitzes. Die Luft wird dabei von der oberen Seite A, durch die Textilauflage 4,8, in die Luftführungskanäle 7 zu der Strömungsverbindung vom Lüfter angesaugt. Hierdurch sind eine Klimatisierung der Sitzfläche sowie eine Regulierung der Feuchtigkeit der Sitzfläche erzielbar. In einer alternativen Ausgestaltung kann die Luft auch von dem Lüfter in die Luftführungskanäle 7 eingeblasen werden und somit ausgehend von den Luftführungskanälen 7 zur oberen Seite A strömen.

Bei der Herstellung des oben beschriebenen Polsterteils, insbesondere eines Sitzpolsters 1 oder Rückenlehnenpolsters für einen Fahrzeugsitz wird in einem ersten Schritt zunächst die Textilauflage 4,8 in eine Werkzeugform eingelegt und positioniert. Die Werkzeugform ist dabei der Raumform des herzustellenden Polsterteils angepasst. Die Textilauflage 4,8 ist wie bereits erläutert ein Verbund aus einem mit einem Vlies, einem Filz oder einem Stoff kaschierten luftdurchlässigen Bezug. Als Dekormaterialien für den Bezug 4 werden vorzugsweise Dekorstoffe, Leder, Kunstleder oder vernähte Kombinationen dieser Materialien verwendet. '

Nach dem Einlegen der Textilauflage 4,8 werden eine Anzahl länglicher hohlraumbildender Stützstrukturen auf die Textilauflage 4,8 aufgelegt.

In einem daran anschließenden Schritt wird eine schaumundurchlässige Sperrschicht 5, vorzugsweise eine Sperrfolie über die Textilauflage und die Stützstrukturen gebracht. Daran anschließend wird ein aufschäumbares und aushärtbares Material in die Werkzeugform eingebracht und die Sperrfolie 5 wird hinterschäumt. Durch die Anordnung und Ausbildung der beabstandet auf der Textilauflage aufliegenden Stützstrukturen verbleibt in den Auflagebereichen der Stützstrukturen zwischen der Sperrschicht und der Textilauflage Hohlräume, die anschließend als Luftführungskanäle 7 bezeichnet werden. Die Anzahl, Ausrichtung und Größe kann dabei entsprechend ausgewählt werden.

Nach dem Aushärten lassen des Materials in der Werkzeugform kann das Polsterteil 1 der Werkzeugform entnommen werden.

## Patentansprüche

1. Verfahren zur Herstellung eines Polsterteils (1), insbesondere eines Sitzpolsters oder Rückenlehnenpolsters für einen Fahrzeugsitz mit einer Textilauflage, mit den Schritte
a. Einlegen der Textilauflage (4,8) in eine Werkzeugform.
b. Aufbringen einer schaumundurchlässigen Sperrschicht (5) auf der zur Kavität der Werkzeugform zugewandten Seite der Textilauflage (4,8),
c. Einbringen eines aufschäumbaren und aushärtbaren Materials,
d. Aushärten lassen des Materials und anschließendes Entnehmen des Polsterteils (1) aus der Werkzeugform, **dadurch gekennzeichnet**,
e. das in einem zusätzlichen Schritt zwischen Textilauflage (4,8) und Sperrschicht (5) eine Anzahl länglicher hohlraumbildender Stützstrukturen eingebracht werden.

2. Verfahren zur Herstellung eines Polsterteils (1), insbesondere eines Sitzpolsters oder Rückenlehneripolsters für einen Fahrzeugsitz mit einer Textilauflage, nach Anspruch 1, wobei die Stützstrukturen aus Drähten ausgebildet sind.

3. Verfahren zur Herstellung eines Polsterteils (1), insbesondere eines Sitzpolsters oder Rückenlehnenpoisters für einen Fahrzeugsitz mit einer Textilauflage, nach Anspruch 2, wobei die Drähte in der Längsausrichtung spiral- oder mäanderförmig gewunden sind.

4. Verfahren zur Herstellung eines Polsterteils (1), insbesondere eines Sitzpolsters oder Rückenlehnenpolsters für einen Fahrzeugsitz mit einer Textilauflage, nach Anspruch 1, wobei die Stützstrukturen aus Federdraht gewickelte Hüllstrukturen sind.

5. Verfahren zur Herstellung eines Polsterteils (1), insbesondere eines Sitzpolsters oder Rückenlehnenpolsters für einen Fahrzeugsitz mit einer Textilauflage, nach Anspruch 1, wobei die Stützstrukturen aus einem Abstandsgewirke gebildet sind.

6. Verfahren zur Herstellung eines Polsterteils (1), insbesondere eines Sitzpolsters oder Rückenlehnenpolsters für einen Fahrzeugsitz mit einer Textilauflage, nach Anspruch 1, wobei die Stützstrukturen aus einem gummielastischen Material gebildet sind.

7. Verfahren zur Herstellung eines Polsterteils (1), insbesondere eines Sitzpolsters oder Rückenlehnenpolsters für einen Fahrzeugsitz mit einer Textilauflage, nach einem oder mehreren der vorangehenden Ansprüche, wobei die Elastizität der Stützstruktur der Elastizität des ausgehärteten Schaummaterials entspricht.

8. Verfahren zur Herstellung eines Polsterteils (1), insbesondere eines Sitzpolsters oder Rückenlehnenpolsters für einen Fahrzeugsitz mit einer Textilauflage, nach einem oder mehreren der vorangehenden Ansprüche, wobei die Textilauflage aus einem mit einem Vlies, einem Filz oder einem Stoff kaschierten luftdurchlässigen Bezug 4 besteht, und das Material der Kaschierung luftdurchlässig ist und die Feuchtigkeit zwischenspeichernde Eigenschaften besitzt
